# EUROPEAN PATENT APPLICATION

(11) **EP 3 460 730 A1**
(43) Date of publication of application: **27.03.2019**
(21) Application number: 18193323.5
(22) Date of filing: 10.09.2018
(51) Int. Cl.: G06Q 10/04, G01C 21/00, G08G 5/00, G06Q 50/30, G01C 21/34

(54) **SYSTEM AND METHOD FOR AIRPORT TERMINAL AREA TRAJECTORY DATA CLUSTERING FOR SELECTING EFFICIENT TERMINAL AREA PROCEDURES**

(30) Priority: 26.09.2017 US 201715715308
(71) Applicant: Honeywell International Inc., Morris Plains, NJ New Jersey 07950 (US)
(72) Inventor: KUSUMA, Murali Krishna, Morris Plains, NJ New Jersey 07950 (US); SRIVASTAV, Amit, Morris Plains, NJ New Jersey 07950 (US); IDUPUNUR, Krishna, Morris Plains, NJ New Jersey 07950 (US); AGARWAL, Anand, Morris Plains, NJ New Jersey 07950 (US); RANGU, Mahender, Morris Plains, NJ New Jersey 07950 (US)
(74) Representative: Houghton, Mark Phillip

(57) **Abstract**

Methods are provided for determining time and fuel efficient airport terminal area procedures for an aircraft. First, a series of departure clusters are generated for a departure airport based on standard instrument departure (SID) procedures. The time and fuel characteristics of the departure clusters are categorized by departure time. Next, a series of destination clusters is generated for a destination airport based on approach procedures and standard terminal arrival (STAR) procedures. The time and fuel characteristics of the destination clusters are categorized by arrival time. The clusters are stored in an electronic database and during planning a flight plan of the aircraft. Once retrieved, terminal area procedures for the flight plan of the aircraft are selected based upon weighted values assigned to the time and fuel characteristics of the departure clusters for a departure airport and the destination clusters for a destination airport.

## Description

### TECHNICAL FIELD

The present invention generally relates to aircraft flight operations, and more particularly relates to a method for airport terminal area trajectory selection procedures.

### BACKGROUND

Operational flight planning for aircraft will typically use a flight planning engine (FPE) to generate a flight plan using a navigational database and specific aircraft data. Time and fuel efficiency are of utmost importance in flight planning. However, planning is difficult in determining the most efficient terminal area departure procedures like standard instrument departure (SID) and destination procedures like standard terminal arrival (STAR) and approach procedures. Hence, there is a need for a system and method for airport terminal area trajectory data clustering that facilitates the selection of time and fuel efficient terminal area procedures.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

A method is provided for determining time and fuel efficient airport terminal area procedures for an aircraft. The method comprises: generating a series of departure clusters for a departure airport based on standard instrument departure (SID) procedures, where time and fuel characteristics of the departure clusters are categorized by departure time; generating a series of destination clusters for a destination airport based on approach procedures and standard terminal arrival (STAR) procedures, where time and fuel characteristics of the destination clusters are categorized by arrival time; storing the departure clusters and the destination clusters in a retrievable electronic database; retrieving appropriate departure clusters and appropriate destination clusters from the electronic database during planning a flight plan of the aircraft; and selecting terminal area procedures for the flight plan of the aircraft based upon weighted values assigned to the time and fuel characteristics of the departure clusters for the departure airport and the destination clusters for the destination airport.

A system is provided for determining time and fuel efficient airport terminal area procedures for an aircraft. The apparatus comprises: a client-side flight plan application that collects flight plan (FPL) data comprising, an aircraft type, a departure location, a destination, total weight of the aircraft, and a departure time from a user; a third-party flight data source of historical flight data (HFD) for the aircraft type, the departure location, the destination, total weight of the aircraft, and the departure times; a server-side flight plan application that receives the FPL data and the HFD via the Internet, where the server side flight plan application comprises, a four-dimensional (4D) trajectory flight plan manager that receives the FPL data and the HFD, a terminal area procedure trajectory cluster generator that receives the HFD from the 4D trajectory flight plan manager, where the terminal area procedure trajectory cluster generator, extracts relevant HFD and terminal area trajectory data, identifies relevant terminal area procedures, groups the relevant terminal area procedures in clusters, and stores the terminal area procedures clusters in a retrievable electronic data repository, and a terminal area procedure trajectory selector that selects the most time and fuel efficient terminal area procedures based on the terminal area procedure clusters retrieved from the electronic data repository and FPL data received from the 4D trajectory flight plan manager.

Furthermore, other desirable features and characteristics of the system and method will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 shows a block diagram of a system for the generation of terminal area trajectory data clusters and efficient terminal area procedures selections in accordance with one embodiment;
FIG.2 shows a flowchart of a method for generation of terminal area procedures trajectory clusters and sub- clusters in accordance with one embodiment;
FIG.3 shows a flowchart of a method for the selection of time and fuel efficient terminal area procedures in accordance with one embodiment; and
FIG. 4 shows a chart of departure sub- clusters in accordance with one embodiment.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

A system and method for determining airport terminal area trajectory data clustering for selecting efficient terminal area procedures has been developed. Embodiments provide for the selection of time and fuel efficient terminal area procedures for a specific time window of departure and destination by considering inputs such as historical flight data (HFD) for the specific aircraft used, the departure airport, the destination airport, the scheduled time of departure and the scheduled time of arrival. Embodiments create terminal area procedure clusters that are stored in a retrievable electronic data repository. When a cluster is retrieved, weighted priorities for fuel and time are used to select the best terminal area procedures for the operational aircraft flight plan.

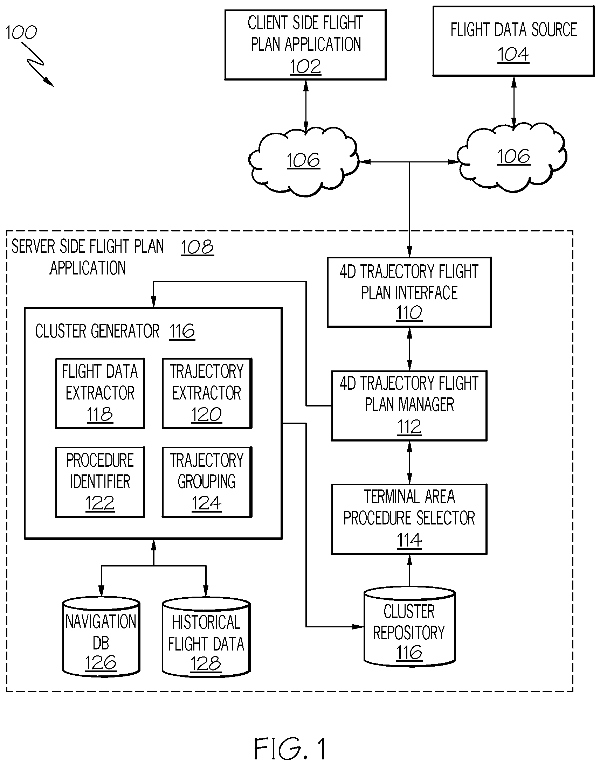

Turning now to FIG. 1, a block diagram is shown of a system 100 for the generation of terminal area trajectory data clusters and efficient terminal area procedures selections in accordance with one embodiment. First, a client-side flight plan application 102 with the user interface collects flight plan (FPL) data that includes the aircraft type, the departure airport, the destination airport, total weight of the aircraft, and the departure time from a user. The client-side flight plan application may be a web application on a computer or an application on a mobile computing device such as a smart phone or tablet. Additionally, historical flight data (HFD) is collected from a third-party flight data source 104. The HFD includes flight data about the specific aircraft, trajectory data between the city pairs (departure and destination) including day and night trajectory data. The FPL data and the HFD are then provided to a server-side flight plan application 108 via the Internet 106.

The server side flight plan application 108 has a four-dimensional (4D) trajectory flight plan interface 110 that receives the FPL data and HFD and passes it along to a 4D trajectory flight plan manager 112. The 4D manager 112 transmits the HFD to a terminal area procedures trajectory cluster generator 116. The cluster generator 116 extracts the relevant HFD 118 along with the relevant terminal area trajectory data 120. The cluster generator 116 then identifies each relevant terminal area procedure 122 and groups the trajectories 124. The cluster generator 116 may also retrieve additional information from a navigational database 126 as well as supplemental historical flight data 128 as needed.

The cluster generator 116 groups the terminal area procedure trajectories into a trajectory cluster. A "cluster" is defined as a group of trajectories based on the day and night timings of either departure or arrival. The trajectory clusters are further grouped into sub-clusters. A "sub-cluster" is defined as a group of trajectories based on the number of departures or arrivals in a specific time slot of a specific day or night trajectory cluster. Generating a sub-cluster from a trajectory day/night cluster allows the system to distinguish between congested time slots and non-congested time slots at a departure or destination.

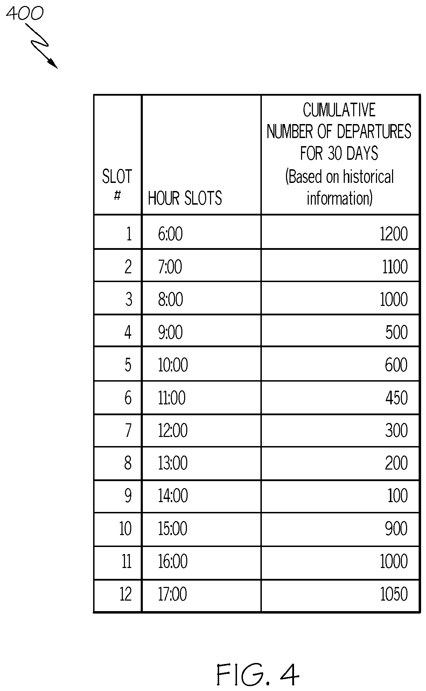

Turning now to FIG. 4, a chart 400 of departure sub-clusters is shown in accordance with one embodiment. In this example, a cluster of daytime departures is divided into twelve slots with each slot being an hour. HFD for this departure location is referenced to determine the cumulative number of departures for the past 30 days. As can be seen, the three sub-clusters from 0600 to 0800 have increased congestion as well as the three sub-clusters from 1500 to 1700. This represents increased flight congestion during the morning and afternoon while the midday sub-clusters from 0900 to 1400 are less congested.

Returning now to FIG. 1, once the departure and destination clusters and sub-clusters are generated, they are stored in a terminal area procedures trajectory cluster repository 116. This is a retrievable electronic storage repository where the individual clusters and sub- clusters may be retrieved at a later time. A terminal area procedure selector 114 receives the FPL data from the 4D flight plan manager 112 and retrieves the relevant trajectory sub-clusters from the repository 116. The terminal area procedures selector then determines the most efficient terminal area procedures for both departure and destination based on FPL departure and arrival times. The terminal area procedures are selected based upon weighted values assigned time, fuel characteristics, the specific type of aircraft and the total weight of the aircraft. The total weight of the aircraft may use two measurements: the take off weight on departure; and the landing weight on approach and arrival. The weighted values and total weight of the aircraft which are used may be chosen by the user using the client-side flight plan application. Once selected, the desired terminal area procedures are transmitted to the 4D trajectory flight plan manager 112 for use in the flight plan of the aircraft.

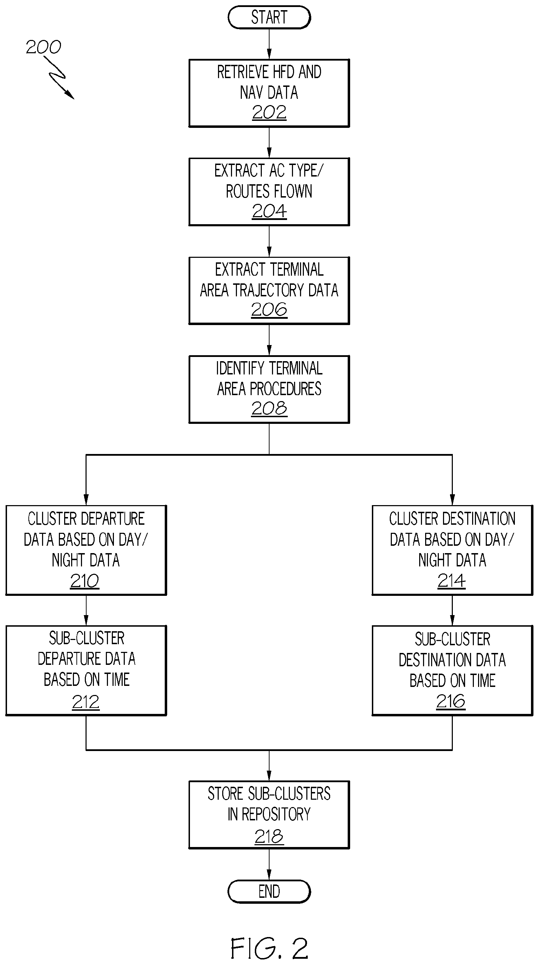

Turning now to FIG. 2, a flowchart is shown of a method 200 for generation of terminal area procedures trajectory clusters and sub-clusters in accordance with one embodiment. In this embodiment, a server-side flight plan application receives FPL data, HFD and Navigation data 202. Specific flight data is extracted including the aircraft type and routes flown 204. Also, terminal area trajectory data is extracted 206. Relevant terminal area procedures are identified 208 and clusters are generated based on day/night data for both departure 210 and destination 214. Sub-clusters are then generated based on time for each departure cluster 212 and destination cluster 216. The sub-clusters are then stored in a retrievable electronic data repository 218.

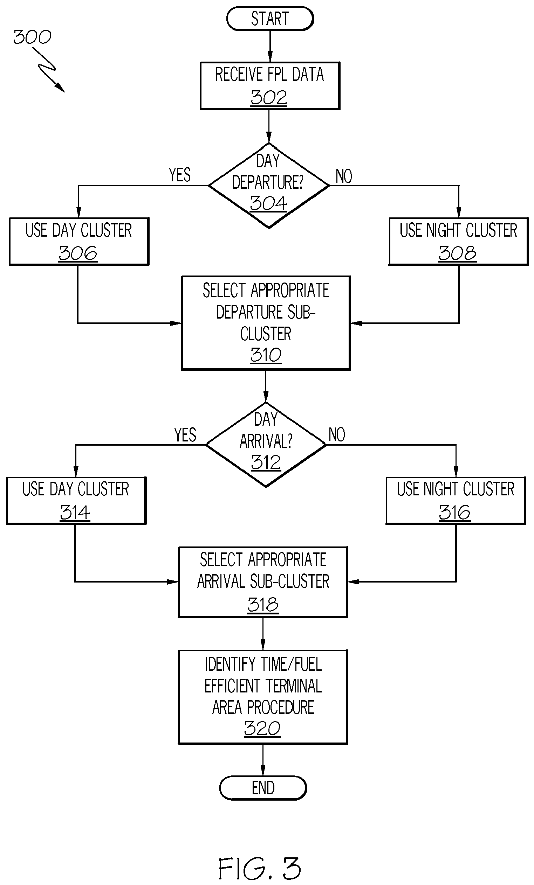

Turning now to FIG. 3, a flowchart is shown of a method 300 for the selection of time and fuel efficient terminal area procedures in accordance with one embodiment. In this embodiment, a terminal area procedures selector receives FPL data 302 and determines if a day departure is planned 304. A day departure will use a day cluster 306 while at night departure will use night clusters 308 with both being stored in the cluster repository. Once the appropriate departure cluster is selected, an appropriate departure sub cluster is further selected 310. The terminal area procedures selector determines if a day arrival is planned 312. A day arrival will use a day cluster 314 while a night arrival will use a night cluster 316 with both being stored in the cluster repository. Once the appropriate arrival cluster is selected, appropriate arrival sub-cluster is further selected 318. The terminal area procedures selector then uses both the departure sub- clusters and the arrival sub-clusters to identify and select time and fuel efficient terminal area procedures 320 that are to be used in the operational flight plan.

In some embodiments, the departure clusters may be based on standard instrument departure (SID) procedures. The arrival clusters may be based on standard terminal arrival (STAR) and approach procedures. HFD may be based upon flight data recorder (FDR) data as well as quick access recorder (QAR) data. HFD may be obtained from system wide information management (SWIM) traffic flow management system (TFMS) aircraft situation data for industry (ASDI) data provided by the federal aviation administration (FAA). HFD may be obtained from flight data aggregators like flight aware or any other sources. HFD is compared with the respective historical aeronautical information regulation and control (AIRAC) data for terminal area procedure identification 122. The identification of time and fuel efficient terminal area procedures may use a weighted summation of scaled score values (WSSV) algorithm to generate a weighted score for different terminal area procedures.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A system for determining time and fuel efficient airport terminal area procedures for an aircraft, comprising:
a client-side flight plan application that collects flight plan (FPL) data comprising, an aircraft type, a departure location, a destination, total weight of the aircraft, and a departure time from a user;
a third-party flight data source of historical flight data (HFD) for the aircraft type, the departure location, the destination, total weight of the aircraft, and the departure times;
a server-side flight plan application that receives the FPL data and the HFD via the Internet, where the server side flight plan application comprises,
a four-dimensional (4D) trajectory flight plan manager that receives the FPL data and the HFD,
a terminal area procedure trajectory cluster generator that receives the HFD from the 4D trajectory flight plan manager, where the terminal area procedure trajectory cluster generator,
extracts relevant HFD and terminal area trajectory data, identifies relevant terminal area procedures,
groups the relevant terminal area procedures in clusters, and stores the terminal area procedures clusters in a retrievable electronic data repository, and
a terminal area procedure trajectory selector that selects the most time and fuel efficient terminal area procedures based on the terminal area procedure clusters retrieved from the electronic data repository and FPL data received from the 4D trajectory flight plan manager.

2. The system of Claim 1, where the client-side flight plan application is located on a mobile computing device.

3. The system of Claim 1, where the client-side flight plan application is a web-based computer application.

4. The system of Claim 1, where the terminal area procedure trajectory cluster generator receives navigational data from an external navigational database.

5. The system of Claim 1, where the terminal area procedure trajectory cluster generator receives additional historical flight data from an external historical flight data base.

6. The system of Claim 1, where the terminal area procedure clusters are stored in the electronic data repository by departure and destination.

7. The system of Claim 1, where the terminal area procedure trajectory selector selects the terminal area procedures based on weighted priorities for time and fuel efficiency.

8. The system of Claim 1, where the terminal area procedure trajectory selector selects the terminal area procedures based the aircraft type.

9. The system of Claim 1, where the terminal area procedure trajectory selector selects the terminal area procedures based the total weight of the aircraft.
